# EUROPEAN PATENT APPLICATION

(11) **EP 2 696 563 A1**
(43) Date of publication of application: **12.02.2014**
(21) Application number: 12767625.2
(22) Date of filing: 28.03.2012
(51) Int. Cl.: H04M 3/00, H04M 3/22, H04W 48/06, H04W 68/00

(54) **MOBILE COMMUNICATION METHOD, SERVICE CONTROL NETWORK DEVICE, AND NODE FOR MOBILE MANAGEMENT**

(30) Priority: 01.04.2011 JP 2011082204
(71) Applicant: NTT DOCOMO, INC., Chiyoda-ku Tokyo 100-6150 (JP)
(72) Inventor: NISHIDA, Katsutoshi, Tokyo 100-6150 (JP); TOKUNAGA, Kazuhito, Tokyo 100-6150 (JP)
(74) Representative: HOFFMANN EITLE
(86) International application number: PCT/JP2012/058135
(87) International publication number: WO 2012/137644

(57) **Abstract**

A mobile communication method according to the present invention includes: a step A of transmitting, a predetermined inquiry signal to an HSS, upon receipt of a terminating signal addressed to a UE from a communication counterpart network; a step B of transmitting, the predetermined inquiry signal to an MME; a step C of determining, by the MME, whether or not it is possible to continue terminating processing based on the terminating signal addressed to the UE in response to the predetermined inquiry signal; a step D of transmitting, a response signal for notifying of determination result to the HSS; a step E of transmitting, the response signal to the IMS device; and a step F of determining, by the IMS device, whether or not to continue the terminating processing based on the terminating signal on the basis of the determination result notified by the response signal.

## Description

### TECHNICAL FIELD

The present invention relates to a mobile communication method, a service control network apparatus, and a mobility management node.

### BACKGROUND ART

Non-patent document 1 specifies terminating processing (for example, terminating processing of a voice call) using an IMS (IP Multimedia Subsystem).

IMS devices which constitute the IMS, such as an S-CSCF (Serving-Call Session Control Function, session control node), a P-CSCF (Proxy-Call Session Control Function, session control node), and the like are bases for performing call control processing independent of a serving state of a UE (User Equipment, mobile station) (for example, in which area the UE is present right now).

Furthermore, the IMS is a base separate from a radio access network or a core network, which provides an actual communication route.

### PRIOR ART DOCUMENT

### NON-PATENT DOCUMENT

Non-patent document 1: 3GPP TS23.228

### SUMMARY OF THE INVENTION

However, in conventional mobile communication systems, when receiving a terminating signal, an IMS starts terminating processing based on the terminating signal independent of a serving state of a UE. Accordingly, even when a radio access network or a core network in an area where the UE is present is busy, the IMS transfers the terminating signal to the core network.

In that case, the core network cannot identify the type of services on which the terminating signal is based (for example, whether or not a voice terminating service, whether or not an SMS terminating service, or the like). Accordingly, the core network starts calling processing and the like as usual regardless of the type of services.

In this way, in the conventional mobile communication systems, there is a problem in that terminating processing cannot be restricted in advance when a radio access network or a core network in an area where the UE is present is busy.

In addition, in the conventional mobile communication systems, there is a problem in that terminating processing cannot be restricted in accordance with the type of services provided by the IMS.

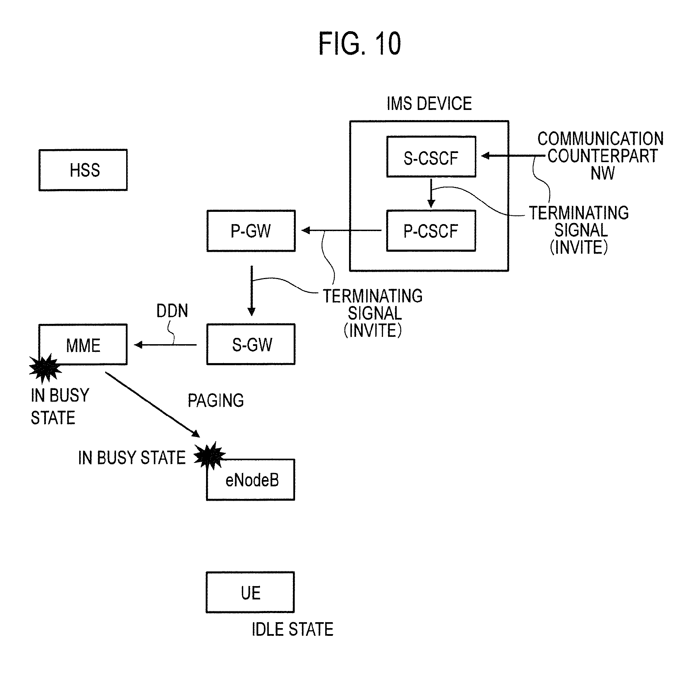

The problems will be explained with reference to Fig. 10.

As shown in Fig. 10, firstly, upon receipt of a terminating signal (INVITE) from a communication counterpart network, an S-CSCF transfers the terminating signal (INVITE) to a P-CSCF independent of a serving state of a UE.

Secondly, the P-CSCF transfers the terminating signal (INVITE) to a P-GW (PDN-Gateway, packet data network gateway apparatus) regardless of whether or not a radio access network or a core network in an area where the UE is present is busy, because the P-CSCF does not recognize the busy state of the radio access network or the core network in the area where the UE is present.

Thirdly, the P-GW transfers the terminating signal (INVITE) to an S-GW (Serving Gateway, serving gateway apparatus).

Fourthly, the S-GW transmits a "DDN (Downlink Data Notification, downlink terminating notification signal)" to an MME (Mobility Management Entity, mobility management node) because the UE is in an "IDLE state".

Here, the reception of the "DDN" from the S-GW might cause the MME in a congestion state to be further worse in terms of the congestion state.

Fifthly, in response to the reception of the "DDN", the MME transmits a "Paging (paging signal)" to an eNodeB (radio base station).

Here, the reception of the "Paging" from the MME might causes the eNodeB in a congestion state to be further worse.

In this way, in the conventional mobile communication systems, there is a problem in that terminating processing cannot be restricted in advance even when a radio access network or a core network in an area where the UE is present is busy, thereby causing the busy state of the radio access network or the core network to be further worse.

Furthermore, in the conventional mobile communication systems, there is a problem in that in the busy state of the radio access network or the core network, terminating processing cannot be restricted in accordance with the type of services provided by the IMS.

Therefore, the present invention has been made in view of the abovementioned problems, and an objective thereof is to provide a mobile communication method, a service control network apparatus, and a mobility management node capable of restricting terminating processing in advance in accordance with the busy state of a radio access network or a core network in the terminating processing using an IMS.

A first feature of the present invention is a mobile communication method including: a step A of transmitting, by a service control network apparatus, a predetermined inquiry signal to a subscriber management server apparatus, upon receipt of a terminating signal addressed to a mobile station from a communication counterpart network; a step B of transmitting, by the subscriber management server apparatus, the predetermined inquiry signal to a mobility management node; a step C of determining, by the mobility management node, whether or not it is possible to continue terminating processing based on the terminating signal in response to the predetermined inquiry signal; a step D of transmitting, by the mobility management node, a response signal for notifying of determination result to the subscriber management server apparatus; a step E of transmitting, by the subscriber management server apparatus, the response signal to the service control network apparatus; and a step F of determining, by the service control network apparatus, whether or not to continue the terminating processing based on the terminating signal on the basis of the determination result notified by the response signal.

A second feature of the present invention is a service control network apparatus configured to transmit a predetermined inquiry signal to a subscriber management server apparatus upon receipt of a terminating signal addressed to a mobile station from a communication counterpart network, and configured to determine, when receiving a response signal with respect to the predetermined inquiry signal from the subscriber management server apparatus, whether or not to continue terminating processing based on the terminating signal on the basis of determination result notified by the response signal.

A third feature of the present invention is a mobility management node configured to determine, when receiving a predetermined inquiry signal from a subscriber management server apparatus, whether or not it is possible to continue terminating processing based on a terminating signal addressed to a mobile station received from a communication counterpart network, and configured to transmit a response signal for notifying of determination result, to the subscriber management server apparatus.

A fourth feature of the present invention is a mobile communication method including the steps of: transmitting, by a service control network apparatus, a predetermined inquiry signal to a subscriber management server apparatus, upon receipt of a terminating signal addressed to a mobile station from a communication counterpart network; transmitting, by the subscriber management server apparatus, the predetermined inquiry signal to a mobility management node; transmitting, by the mobility management node, determination information necessary for determining whether or not it is possible to continue terminating processing based on the terminating signal to the subscriber management server apparatus, in response to the predetermined inquiry signal; determining, by the subscriber management server apparatus, whether or not it is possible to continue the terminating processing based on the terminating signal on the basis of the determination information; transmitting, by the subscriber management server apparatus, a response signal for notifying of determination result, to the service control network apparatus; and determining, by the service control network apparatus, whether or not to continue the terminating processing based on the terminating signal on the basis of the determination result notified by the response signal.

### BRIEF DESCRIPTION OF DRAWINGS

[Fig. 1] Fig. 1 is an overall configuration diagram of a mobile communication system according to a first embodiment of the present invention.
[Fig. 2] Fig. 2 is a diagram for explaining an operation of the mobile communication system according to the first embodiment of the present invention.
[Fig. 3] Fig. 3 is a sequence diagram illustrating the operation of the mobile communication system according to the first embodiment of the present invention.
[Fig. 4] Fig. 4 is a view illustrating an example of a data configuration of a "Sh-Pull" used in the mobile communication system according to the first embodiment of the present invention.
[Fig. 5] Fig. 5 is a view illustrating an example of a data configuration of an "Insert Subscriber Data Request" used in the mobile communication system according to the first embodiment of the present invention.
[Fig. 6] Fig. 6 is a view illustrating an example of a data configuration of an "Insert Subscriber Data Answer" used in the mobile communication system according to the first embodiment of the present invention.
[Fig. 7] Fig. 7 is a view illustrating an example of a data configuration of a "Sh-Pull Response" used in the mobile communication system according to the first embodiment of the present invention.
[Fig. 8] Fig. 8 is a sequence diagram illustrating another operation of the mobile communication system according to the first embodiment of the present invention.
[Fig. 9] Fig. 9 is a sequence diagram illustrating an operation of a mobile communication system according to a first modification example of the present invention.
[Fig. 10] Fig. 10 is a diagram for explaining problems of a conventional mobile communication system.

### MODE FOR CARRYING OUT THE INVENTION

### (Mobile Communication System According to First Embodiment of Present Invention)

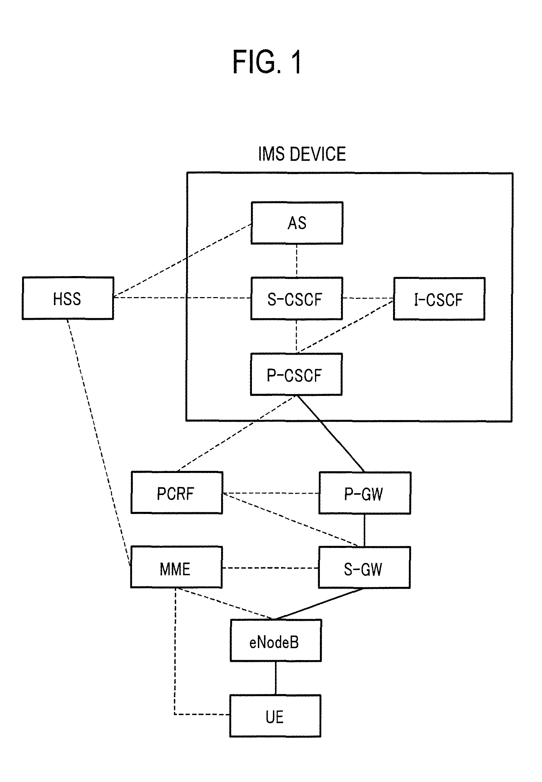

A mobile communication system according to a first embodiment of the present invention will be explained with reference to Fig. 1 to Fig. 8. The mobile communication system according to the present embodiment is a mobile communication system in which an E-UTRAN (Evolved Universal Terrestrial Radio Access Network) system is used.

Note that, the present invention is applicable to a mobile communication system in which a UTRAN (Universal Terrestrial Radio Access Network)/GERAN (GSM Edge Radio Access) system or other radio access networks are used, or a mobile communication system in which a GPRS (General Packet Radio Service) network or other packet core networks are used.

For example, when applying to the GPRS network, the present invention can correspond by reading an MME in the embodiment as an SGSN (Serving GPRS Support Node, packet switch).

As shown in Fig. 1, the mobile communication system according to the present embodiment is provided with an eNodeB, an MME, an S-GW, a P-GW, a PCRF (Policy and Charging Rules Function, policy and charging rules node), an HSS (Home Subscriber Server, subscriber management server apparatus), IMS devices, or the like.

Furthermore, as for the IMS devices, provided are an S-CSCF, a P-CSCF, an I-CSCF (Interrogating-Call Session Control Function, session control node), an AS (Application Server, application server apparatus), and the like.

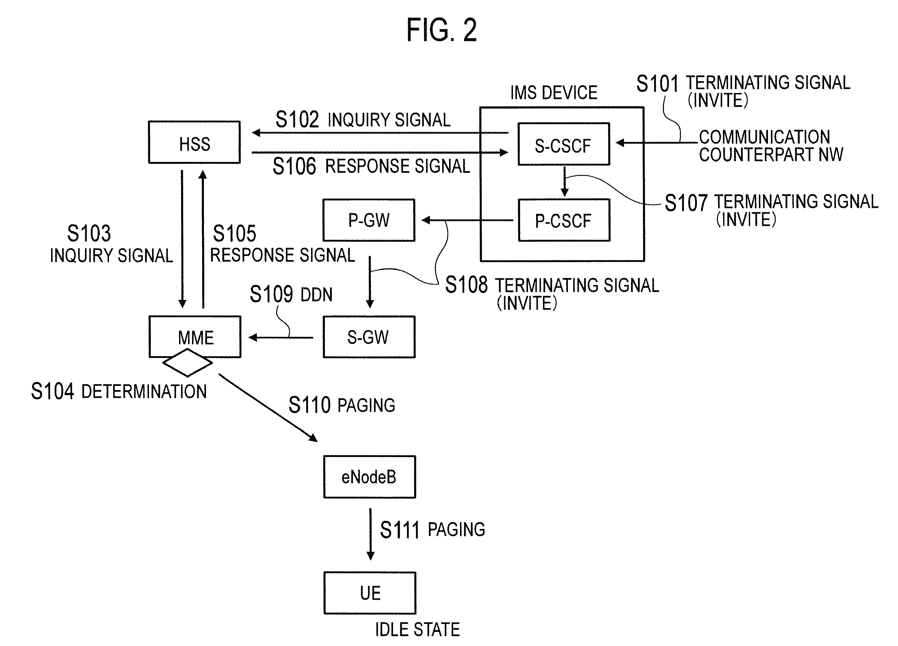

Hereinafter, operations of the mobile communication system according to the present embodiment will be explained with reference to Fig. 2 to Fig. 8.

Firstly, an operation in a case where terminating processing using the IMS is succeeded in the mobile communication system according to the present embodiment (for example, an operation in a case where no congestion occurs in the radio access network or the MME) will be explained with reference to Fig. 2 to Fig. 7.

As shown in Fig. 2, upon receipt of a terminating signal (INVITE) addressed to a UE from a communication counterpart network at Step S101, the S-CSCF transmits a predetermined inquiry signal to the HSS at Step S102.

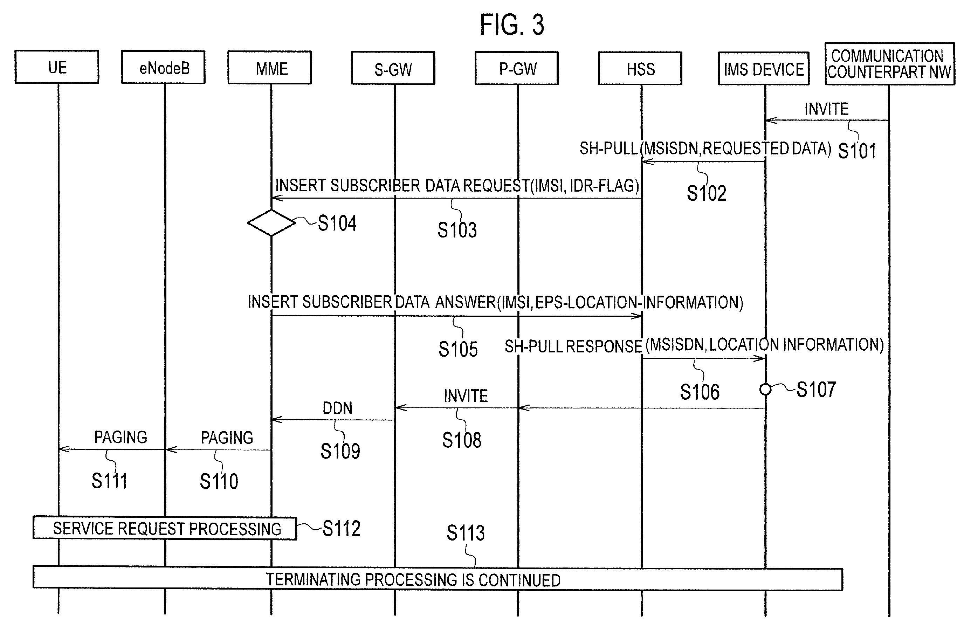

For example, as shown in Fig. 3, at Step S102, the IMS device may transmit a predetermined inquiry signal by means of a "Sh-Pull" including "MSISDN" and "Requested data".

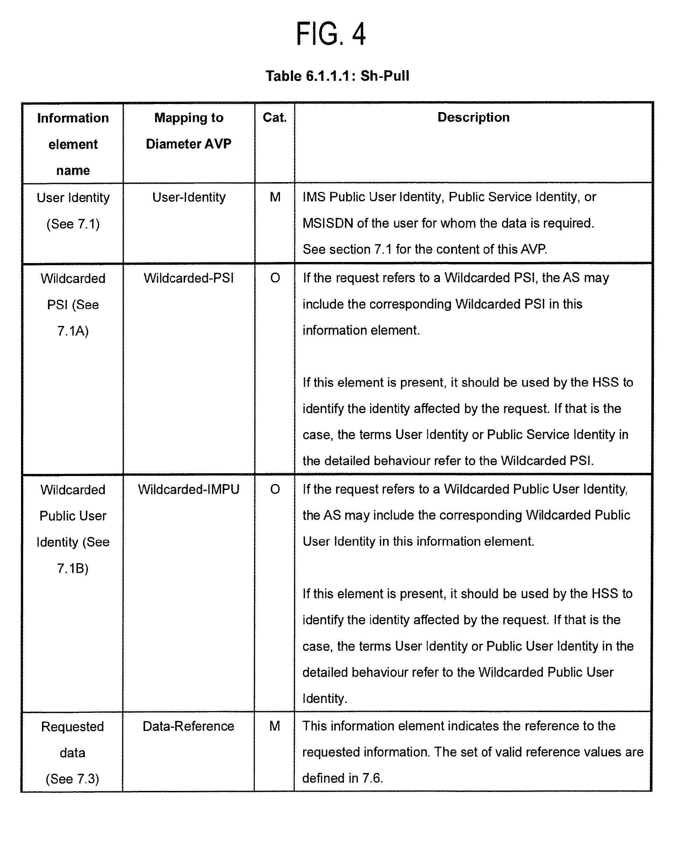

The predetermined inquiry signal may be "Location Information (an inquiry signal for an area where the UE is present) ", "T-ADS Information", an inquiry signal for the busy state, or the like, which is set in the information element "Requested data" in the "Sh-Pull (refer to Table 6.1.1.1 of 3GPP TS29.328) shown in Fig. 4, or may be another inquiry signal.

Furthermore, the IMS device which transmits a predetermined inquiry signal may not be the S-CSCF but other IMS devices such as the P-CSCF and the AS.

At Step S103, the HSS transmits the predetermined inquiry signal to the MME.

For example, as shown in Fig. 3, at Step S103, the HSS may transmit the predetermined inquiry signal by means of an "Insert Subscriber Data Request" including "IMSI" and "IDR-Flag".

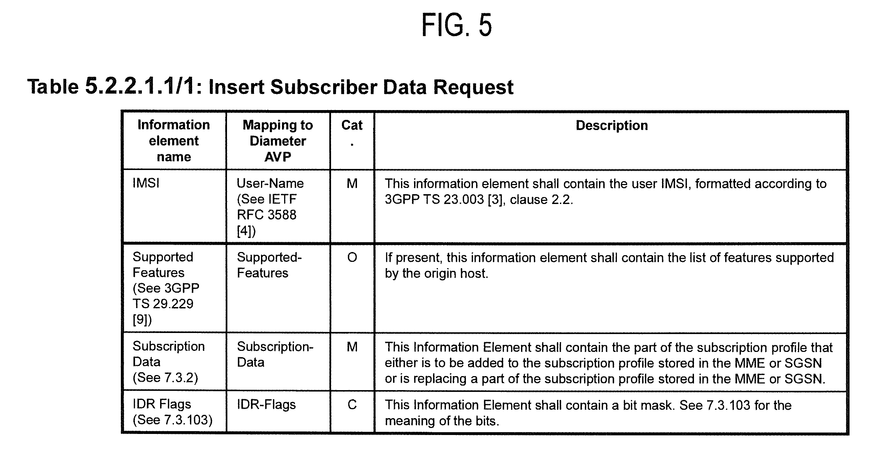

The predetermined inquiry signal may be an "EPS Location Information Request (an inquiry signal for an area where the UE is present) ", a "Current Location Request (an inquiry signal for present connection location information of the UE)", a "T-ADS Data Request", an inquiry signal for the busy state, or the like, which is set in the information element "IDR-Flag" in the "Insert Subscriber Data Request (refer to Table 5.2.2.1.1/1 of 3GPP TS29.272) shown in Fig. 5, or may be another inquiry signal.

At Step S104, the MME determines whether or not it is possible to continue terminating processing based on the terminating signal addressed to the UE.

For example, the MME may determine whether or not it is possible to continue terminating processing based on the terminating signal addressed to the UE, in accordance with the congestion state in the radio access network apparatus, the MME, the S-GW, or the P-GW (restriction rate or the like in the radio access network or the core network), the type of users (normal user or priority user), or the like.

Here, the eNodeB may notify the MME of the restriction rate in the radio access network, or a network control apparatus (operation manipulation stand or the like) may instruct the MME about the restriction rate in the radio access network.

Here, the eNodeB may notify the MME of load information in the eNodeB every time when a signal is transmitted/received between the MME and the eNodeB, may notify the MME of load information in the eNodeB when the load information in the eNodeB exceeds a predetermined threshold value, or may notify the MME of load information in the eNodeB when the load information in the eNodeB is less than a predetermined threshold value.

Furthermore, the eNodeB may notify the MME of restriction targeted area information. Alternatively, the network control apparatus (operation manipulation stand or the like) may instruct the MME about restriction targeted area information.

Note that, the IMS device provides information related to the type of services provided by the IMS by means of the inquiry signal, and the MME adds the information related to the type of services in addition to the abovementioned elements so that the MME may determine whether or not it is possible to continue terminating processing based on the terminating signal addressed to the UE.

Alternatively, the MME transmits determination information necessary for determining whether or not it is possible to continue terminating processing based on the abovementioned terminating signal to the HSS by means of a response signal, and the HSS may determine whether or not it is possible to continue terminating processing based on the terminating signal addressed to the UE based on the determination information.

In addition, the HSS transfers the determination information to the IMS device by means of a response signal, and the IMS device may determine whether or not it is possible to continue terminating processing based on the terminating signal addressed to the UE based on the determination information.

Here, the determination information may include information on the busy state in the radio access network or the core network (restriction rate or the like), the type of users (normal user or priority user), restriction targeted area information, or the like.

In that case, the MME may be configured not to execute processing at Step S110 until receiving a "DDN" at Step S109. Alternatively, the MME also determines whether or not it is possible to continue terminating processing based on the terminating signal addressed to the UE so that the MME may be configured to execute processing at Step S110 before transmitting a response signal at Step S105.

In an example of Fig. 3, the MME determines that it is possible to continue the terminating processing based on the terminating signal addressed to the UE.

At Step S105, the MME transmits a response signal for notifying of the determination result, to the HSS.

Here, when receiving an inquiry signal for an area where the UE is present as the predetermined inquiry signal, the MME may notify serving area information where the UE is present (for example, a location registration area, a cell ID, or the like) by means of the response signal.

For example, as shown in Fig. 3, at Step S105, the MME may transmit the response signal by means of an "Insert Subscriber Data Answer" including "IMSI" and "EPS-Location-Information".

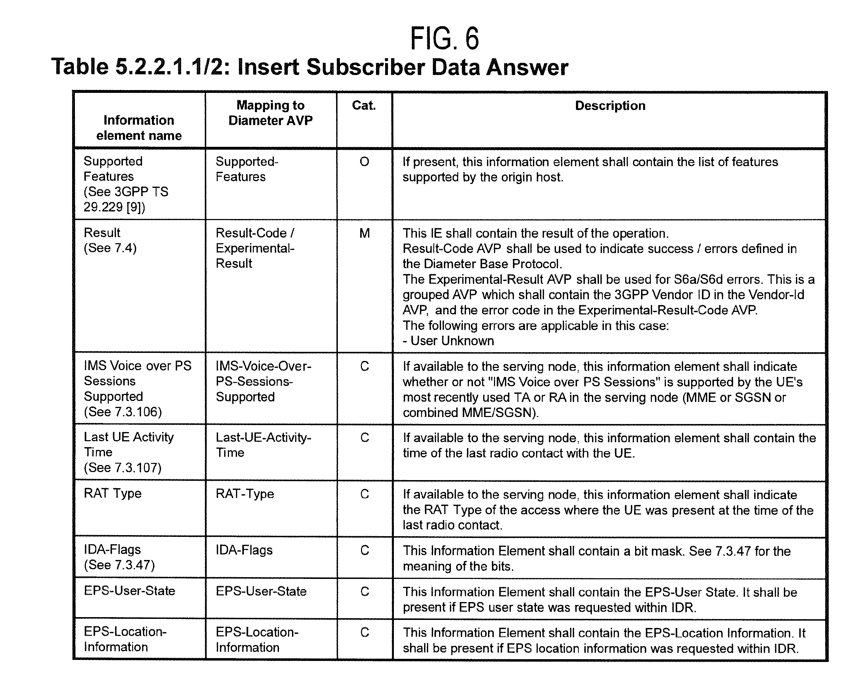

The response signal may be "MME-Location-Information (a response signal in an area where the UE is present under the MME) ", "SGSN-Location-Information (a response signal in an area where the UE is present under the SGSN) ", "Last UE Activity Time" that is information related to T-ADS, a response signal for the busy state, or the like, which is set in the information element "EPS-Location-Information" in the "Insert Subscriber Data Answer (refer to Table 5.2.2.1.1/2 of 3GPP TS29.272)" shown in Fig. 6, or may be another response signal.

At Step S106, the HSS transmits the response signal to the S-CSCF.

For example, as shown in Fig. 3, at Step S106, the MME may transmit the response signal by means of a "Sh-Pull Response" including "MSISDN" and "Location Information".

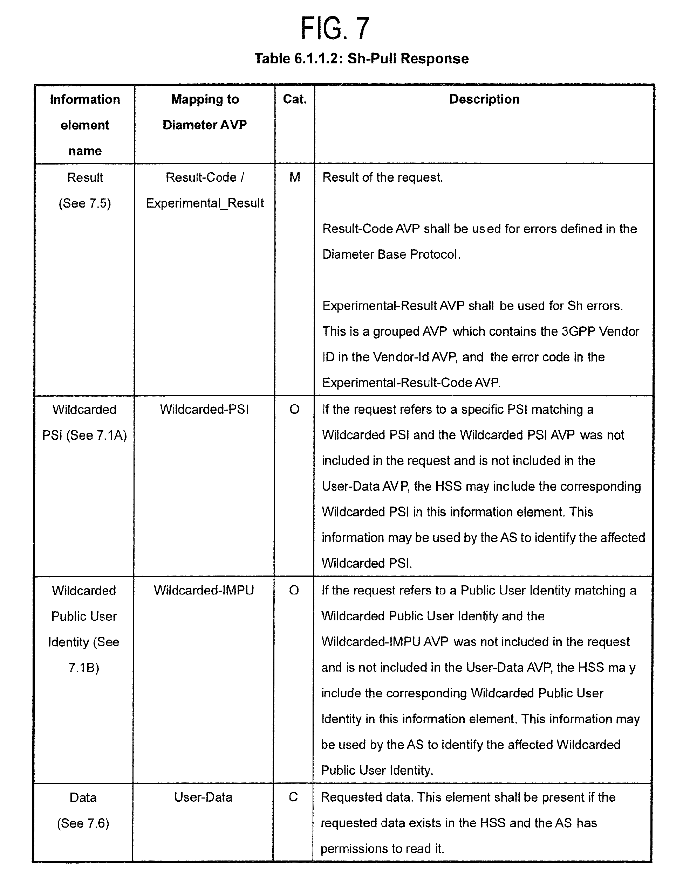

The response signal may be "Location Information (a response signal in an area where the UE is present)", "T-ADS Information", a response signal for the busy state, or the like, which is set in the information element "DATA" in the "Sh-Pull Response (refer to Table 6.1.1.2 of 3GPP TS29.328)" shown in Fig. 7, or may be another response signal.

At Step S107, the S-CSCF checks of the determination result notified by the received response signal for indicating that it is possible to continue the abovementioned terminating processing, and transfers the terminating signal (INVITE) addressed to the UE to the P-CSCF.

At Step S108, the P-CSCF transfers the terminating signal (INVITE) addressed to the UE to the P-GW, and the P-GW transfers the terminating signal (INVITE) addressed to the UE to the S-GW.

At Step S109, the S-GW transmits a "DDN" to the MME because the UE is in an "IDLE state".

At Step S110, in response to the "DDN", the MME transmits a "Paging" to the eNodeB. At Step S111, the eNodeB transmits the "Paging" to the UE.

Thereafter, "Service Request processing" is performed at Step S112, and the terminating processing using the normal IMS is continued at Step S113.

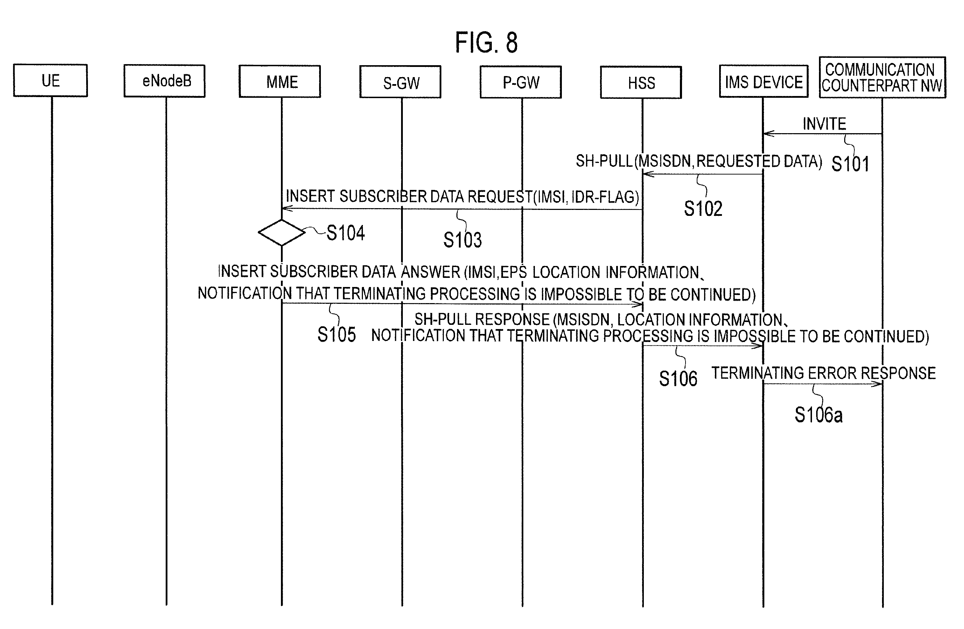

Secondly, an operation in a case where terminating processing using the IMS is failed in the mobile communication system according to the present embodiment (for example, an operation in a case where congestion occurs in the radio access network, the MME, the S-GW, or the P-GW) will be explained with reference to Fig. 8. Hereinafter, the operation will be explained by focusing on different points with the operation of Fig. 3.

In an example of Fig. 8, at Step S104, the MME determines that it is impossible to continue the terminating processing based on the terminating signal addressed to the UE.

At Step S105, the MME transmits a response signal for notifying of the determination result, to the HSS.

Here, because the MME determines that it is impossible to continue the terminating processing based on the terminating signal addressed to the UE, the MME may notify the HSS of a reason why it is impossible to continue the terminating processing by means of the response signal, in addition to the abovementioned serving area information where the UE is present.

At Step S106, the HSS transmits the response signal to the S-CSCF.

At Step S106a, because the determination result notified by the abovementioned response signal indicates that it is impossible to continue the terminating processing based on the terminating signal addressed to the UE, the IMS device, such as the S-CSCF, transmits a terminating error response signal indicating that the terminating processing is failed to the communication counterpart network.

Note that, the IMS device provides information related to the type of services provided by the IMS by means of the inquiry signal, and the MME adds the information related to the type of services in addition to the abovementioned elements so that the MME may determine whether or not it is possible to continue terminating processing based on the terminating signal addressed to the UE.

With the operation, the MME can determine whether or not it is possible to continue the terminating processing for each type of services. For example, the MME can determine such that although continuing the terminating processing for a voice terminating service is rejected, continuing the terminating processing for an SMS terminating service is allowed.

Alternatively, the MME transmits determination information necessary for determining whether or not it is possible to continue terminating processing based on the abovementioned terminating signal to the HSS by means of a response signal, and the HSS may determine whether or not it is possible to continue terminating processing based on the terminating signal addressed to the UE based on the determination information.

In addition, the HSS transfers the determination information to the IMS device by means of a response signal, and the IMS device may determine whether or not it is possible to continue terminating processing based on the terminating signal addressed to the UE based on the determination information.

Here, the determination information may include information on the busy state in the radio access network or the core network (restriction rate or the like), the type of users (normal user or priority user), restriction targeted area information, or the like.

In that case, the MME may be configured not to execute processing at Step S110 until receiving a "DDN" at Step S109. Alternatively, the MME also determines whether or not it is possible to continue terminating processing based on the terminating signal addressed to the UE so that the MME may be configured to execute processing at Step S110 before transmitting a response signal at Step S105.

With the operation, the IMS device can determine whether or not it is possible to continue the terminating processing for each type of services. For example, the IMS device can determine such that although the terminating processing for a voice terminating service is not continued, the terminating processing for an SMS terminating service is continued.

According to the mobile communication system according to the present embodiment, the IMS device can recognize whether or not it is possible to continue terminating processing based on the terminating signal addressed to the UE (for example, the congestion state in the radio access network, the MME, the S-GW, or the P-GW) before starting the terminating processing based on the terminating signal addressed to the UE. Accordingly, the terminating processing can be restricted in advance if necessary.

### (First Modification Example)

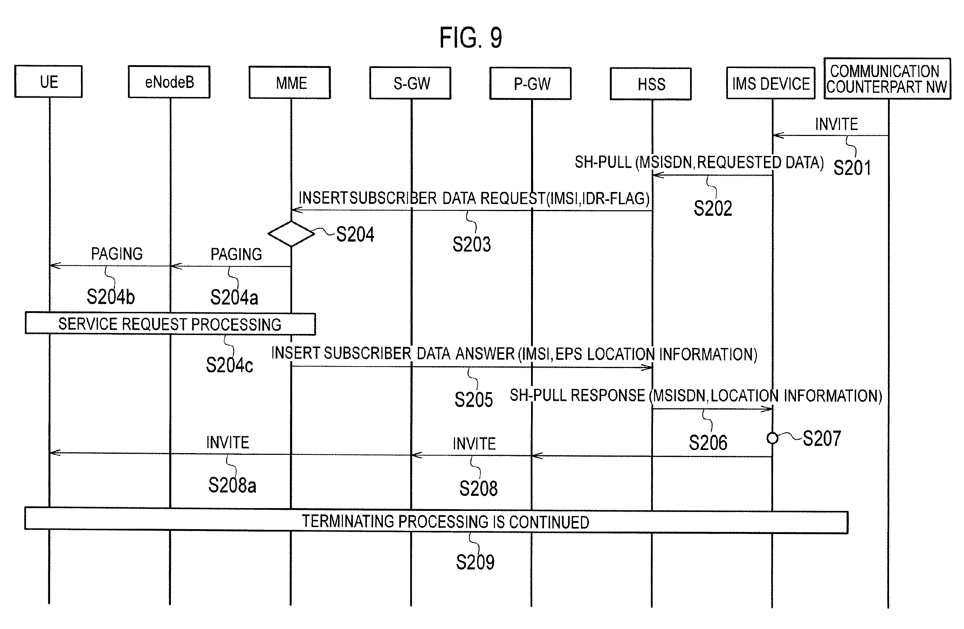

A mobile communication system according to a first modification example of the first embodiment of the present invention will be explained with reference to Fig. 9. Hereinafter, the mobile communication system according to the first modification example of the first embodiment of the present invention will be explained by focusing on different points with the abovementioned mobile communication system according to the first embodiment.

As shown in Fig. 9, the operations at Step S201 to S204 are the same as the operations at Step S101 to S104 shown in Fig. 3.

If determining that it is possible to continue the terminating processing based on the terminating signal addressed to the UE at Step S204, the MME transmits a "Paging" to the eNodeB which manages an location registration area of the UE at Step S204a, before transmitting the abovementioned response signal to the HSS.

Whether or not the operation is necessary to be started may be determined by predetermined information set in a predetermined inquiry signal (for example, an "Insert Subscriber Data Request").

Furthermore, the IMS device notifies the MME of a type of services provided by the IMS by means of a predetermined inquiry signal so that the MME may determine whether or not it is possible to continue terminating processing based on the type of services.

Here, the MME may transmit a "Paging" after transmitting the abovementioned response signal, or may transmit a "Paging" at the same time transmitting the abovementioned response signal.

At Step S204b, the eNodeB transmits the "Paging" to the UE. As a result, at Step S204c, "Service Request processing" is performed.

At Step S205, the MME transmits a response signal for notifying of the determination result, to the HSS.

Here, the MME may notify the HSS of a result by the abovementioned "Paging", identifying information (cell ID or the like) on a cell in connection with the UE, or the like, by means of the response signal.

At Step S206, the HSS transmits the response signal to the S-CSCF.

At Step S207, the S-CSCF checks of the determination result notified by the received response signal for indicating that it is possible to continue the abovementioned terminating processing, and transfers the terminating signal (INVITE) addressed to the UE to the P-CSCF.

At Step S208, the P-CSCF transfers the terminating signal (INVITE) addressed to the UE to the P-GW, and the P-GW transfers the terminating signal (INVITE) addressed to the UE to the S-GW.

At Step S208a, the S-GW transfers the terminating signal (INVITE) addressed to the UE to the MME because the UE is in a "CONNECTED state".

Thereafter, at Step S209, the terminating processing using the normal IMS is continued.

The features of the present embodiment described above may be expressed as follows.

A first feature of the present embodiment is a mobile communication method including: a step A of transmitting, by an IMS device (service control network apparatus), a predetermined inquiry signal to an HSS (subscriber management server apparatus), upon receipt of a terminating signal (INVITE) addressed to a UE (mobile station) from a communication counterpart network; a step B of transmitting, by the HSS, the predetermined inquiry signal to an MME (mobility management node); a step C of determining, by the MME, whether or not it is possible to continue terminating processing based on the terminating signal addressed to the UE in response to the predetermined inquiry signal; a step D of transmitting, by the MME, a response signal for notifying of determination result to the HSS; a step E of transmitting, by the HSS, the response signal to the IMS device; and a step F of determining, by the IMS device, whether or not to continue the terminating processing based on the terminating signal on the basis of the determination result notified by the response signal.

In the first feature of the present embodiment, at the step F, when the determination result notified by the abovementioned response signal indicates that it is impossible to continue the terminating processing based on the terminating signal addressed to the UE, the IMS device may transmit a terminating error response signal indicating that the terminating processing is failed to the communication counterpart network.

In the first feature of the present embodiment, at the step C, when determining that it is possible to continue the terminating processing based on the terminating signal addressed to the UE, the MME may transmit a "Paging (paging signal)" to the UE via an eNodeB (radio base station) before transmitting the abovementioned response signal to the the HSS.

A second feature of the present embodiment is an IMS device configured to transmit a predetermined inquiry signal to an HSS upon receipt of a terminating signal addressed to a UE from a communication counterpart network, and configured to determine, when receiving a response signal with respect to the predetermined inquiry signal from the HSS, whether or not to continue the terminating processing on the basis of determination result notified by the response signal.

In the second feature of the present embodiment, the IMS device may be configured to transmit, when the determination result notified by the abovementioned response signal indicates that it is impossible to continue the abovementioned terminating processing, a terminating error response signal indicating that the terminating processing is failed to the communication counterpart network.

A third feature of the present embodiment is an MME configured to determine, when receiving a predetermined inquiry signal from an HSS, whether or not it is possible to continue terminating processing based on a terminating signal addressed to a UE received from a communication counterpart network, and configured to transmit a response signal for notifying of determination result, to the HSS.

In the third feature of the present embodiment, the MME may be configured to transmit, when determining that it is possible to continue the abovementioned terminating processing, a "Paging" to the UE via an eNodeB before transmitting the abovementioned response signal to the HSS.

A fourth feature of the present embodiment is a mobile communication method including the steps of: transmitting, by an IMS device, a predetermined inquiry signal to an HSS, upon receipt of a terminating signal addressed to a UE from a communication counterpart network; transmitting, by the HSS, the predetermined inquiry signal to an MME; transmitting, by the MME, determination information necessary for determining whether or not it is possible to continue terminating processing based on the abovementioned terminating signal to the HSS, in response to the predetermined inquiry signal; determining, by the HSS, whether or not it is possible to continue the terminating processing on the basis of the determination information as described above; transmitting, by the HSS, a response signal for notifying of determination result, to the IMS device; and determining, by IMS device, whether or not to continue the abovementioned terminating processing on the basis of the determination result notified by the response signal.

Note that the above described operations of the UE, the eNodeB, the MME, the S-GW, the P-GW, the PCRF, the HSS, the P-CSCF, the S-CSCF, the I-CSCF, and the AS may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the UE, the eNodeB, the MME, the S-GW, the P-GW, the PCRF, the HSS, the P-CSCF, the S-CSCF, the I-CSCF, and the AS. Also, the storage medium and the processor may be provided in the UE, the eNodeB, the MME, the S-GW, the P-GW, the PCRF, the HSS, the P-CSCF, the S-CSCF, the I-CSCF, and the AS as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### Industrial Applicability

Note that, the entire content of Japanese Patent Application 2011-082204 (filed on April 1, 2011) is incorporated herein by reference.

### INDUSTRIAL APPLICABILITY

As described above, the present invention can provide a mobile communication method, a service control network apparatus, and a mobility management node capable of restricting terminating processing in advance in accordance with the busy state of a radio access network or a core network in the terminating processing using an IMS.

### EXPLANATION OF THE REFERENCE NUMERALS

- UE: mobile station
- eNodeB: radio base station
- MME: mobility management node
- S/P/I-CSCF: session control node
- PCRF: policy and charging rules node
- P-GW, S-GW: gateway apparatus
- HSS: subscriber management server apparatus
- AS: application server apparatus

## Claims

1. A mobile communication method comprising:
a step A of transmitting, by a service control network apparatus, a predetermined inquiry signal to a subscriber management server apparatus, upon receipt of a terminating signal addressed to a mobile station from a communication counterpart network;
a step B of transmitting, by the subscriber management server apparatus, the predetermined inquiry signal to a mobility management node;
a step C of determining, by the mobility management node, whether or not it is possible to continue terminating processing based on the terminating signal in response to the predetermined inquiry signal;
a step D of transmitting, by the mobility management node, a response signal for notifying of determination result to the subscriber management server apparatus;
a step E of transmitting, by the subscriber management server apparatus, the response signal to the service control network apparatus; and
a step F of determining, by the service control network apparatus, whether or not to continue the terminating processing based on the terminating signal on the basis of the determination result notified by the response signal.

2. The mobile communication method according to claim 1, wherein, at the step F, when the determination result notified by the response signal indicates that it is impossible to continue the terminating processing based on the terminating signal, the service control network apparatus transmits a terminating error response signal indicating that the terminating processing is failed to the communication counterpart network.

3. The mobile communication method according to claim 1, wherein, at the step C, when determining that it is possible to continue the terminating processing based on the terminating signal, the mobility management node transmits a paging signal to the mobile station via a radio base station before transmitting the response signal to the subscriber management server apparatus.

4. A service control network apparatus configured to transmit a predetermined inquiry signal to a subscriber management server apparatus upon receipt of a terminating signal addressed to a mobile station from a communication counterpart network, and
configured to determine, when receiving a response signal with respect to the predetermined inquiry signal from the subscriber management server apparatus, whether or not to continue terminating processing based on the terminating signal on the basis of determination result notified by the response signal.

5. The service control network apparatus according to claim 4, wherein the service control network apparatus is configured to transmit, when the determination result notified by the response signal indicates that it is impossible to continue the terminating processing based on the terminating signal, a terminating error response signal indicating that the terminating processing based on the terminating signal is failed to the communication counterpart network.

6. A mobility management node configured to determine, when receiving a predetermined inquiry signal from a subscriber management server apparatus, whether or not it is possible to continue terminating processing based on a terminating signal addressed to a mobile station received from a communication counterpart network, and
configured to transmit a response signal for notifying of determination result, to the subscriber management server apparatus.

7. The mobility management node according to claim 6, wherein the mobility management node is configured to transmit, when determining that it is possible to continue the terminating processing based on the terminating signal, a paging signal to the mobile station via a radio base station before transmitting the response signal to the subscriber management server apparatus.

8. A mobile communication method comprising the steps of:
transmitting, by a service control network apparatus, a predetermined inquiry signal to a subscriber management server apparatus, upon receipt of a terminating signal addressed to a mobile station from a communication counterpart network;
transmitting, by the subscriber management server apparatus, the predetermined inquiry signal to a mobility management node;
transmitting, by the mobility management node, determination information necessary for determining whether or not it is possible to continue terminating processing based on the terminating signal to the subscriber management server apparatus, in response to the predetermined inquiry signal;
determining, by the subscriber management server apparatus, whether or not it is possible to continue the terminating processing based on the terminating signal on the basis of the determination information;
transmitting, by the subscriber management server apparatus, a response signal for notifying of determination result, to the service control network apparatus; and
determining, by the service control network apparatus, whether or not to continue the terminating processing based on the terminating signal on the basis of the determination result notified by the response signal.
